# EUROPEAN PATENT APPLICATION

(11) **EP 4 819 446 A1**
(43) Date of publication of application: **07.10.2026**
(21) Application number: 26167972.4
(22) Date of filing: 26.03.2026
(51) Int. Cl.: H02K 1/276, H02K 15/035

(54) **SYSTEMS AND METHODS FOR FRACTURED MAGNETS FOR MOTOR**

(30) Priority: 02.04.2025 US 202563782319 P; 19.03.2026 US 202619572120
(71) Applicant: Borgwarner Luxembourg Automotive Systems SA, 4940 Bascharage (LU)
(72) Inventor: DAVID, Pascal, Luxembourg (LU); LEBLAY, Arnaud, Beuveille (FR); BOURNICHE, Eric, Preutin-Higny (FR)
(74) Representative: Office Freylinger

(57) **Abstract**

A system includes a motor (190), the motor including: a stator (202) including one or more windings (250); and a rotor (200) to rotate relative to the stator based on a current in the one or more windings, the rotor including: a rotor shaft (280); and a lamination stack (260) on the rotor shaft, the lamination stack including: one or more lamination sheets, and one or more fractured magnets in the one or more lamination sheets, wherein the one or more fractured magnets are fractured after being installed in the lamination stack.

## Description

### TECHNICAL FIELD

Various embodiments of the present disclosure relate generally to reducing eddy current loss in motors and, more particularly, to fracturing magnets within a motor to reduce loss caused by eddy currents.

### BACKGROUND

A Permanent Magnet Synchronous Machine (PMSM) may use permanent magnets that interact with a rotating electric field of a stator to enable motor rotation. Magnets may be made of electrically conductive material, which may, when in use in the motor, increase eddy current loss. Eddy current loss may increase the temperature of the motor, which may damage the motor. For example, when the magnet temperature exceeds the Curie temperature, the magnets may lose their magnetization rendering them inactive during operation of the electric machine.

The present disclosure is directed to overcoming one or more of these above-referenced challenges.

### SUMMARY OF THE DISCLOSURE

In some aspects, the techniques described herein relate to a system including a motor, the motor including: a stator including one or more windings; and a rotor to rotate relative to the stator based on a current in the one or more windings, the rotor including: a rotor shaft; and a lamination stack on the rotor shaft, the lamination stack including: one or more lamination sheets, and one or more fractured magnets in the one or more lamination sheets, wherein the one or more fractured magnets are fractured after being installed in the lamination stack.

In some aspects, the techniques described herein relate to a system, wherein the one or more fractured magnets include permanent magnets.

In some aspects, the techniques described herein relate to a system, wherein the one or more fractured magnets, that are fractured after being installed in the lamination stack, include one or more fractures extending in a direction perpendicular to a magnetization direction of the one or more fractured magnets.

In some aspects, the techniques described herein relate to a system, wherein the one or more fractures are formed by a compressive force applied in an axial direction relative to the lamination stack after the one or more fractured magnets are installed in the lamination stack as unfractured magnets.

In some aspects, the techniques described herein relate to a system, wherein each fractured magnet among the one or more fractured magnets includes at least two pieces.

In some aspects, the techniques described herein relate to a system, wherein each fractured magnet among the one or more fractured magnets includes one or more notches.

In some aspects, the techniques described herein relate to a system, wherein each fractured magnet among the one or more fractured magnets includes isolation material in one or more fractures.

In some aspects, the techniques described herein relate to a system, wherein the one or more fractured magnets include a brittle material configured to fracture when a compressive force is applied.

In some aspects, the techniques described herein relate to a system, wherein each fractured magnet among the one or more fractured magnets includes at least ten pieces.

In some aspects, the techniques described herein relate to a system, wherein: the one or more lamination sheets define one or more cavities, and the one or more fractured magnets are positioned in the one or more cavities.

In some aspects, the techniques described herein relate to a system, further including: a power converter connected to the motor; and a battery connected to the power converter, wherein the system is provided as a vehicle.

In some aspects, the techniques described herein relate to a method including: placing one or more magnets in a rotor; fracturing the one or more magnets in the rotor; and applying isolation material to the one or more magnets in the rotor.

In some aspects, the techniques described herein relate to a method, wherein fracturing the one or more magnets includes using a fracturing tool.

In some aspects, the techniques described herein relate to a method, wherein the fracturing tool includes one or more of a wedge or a protrusion for fracturing the one or more magnets.

In some aspects, the techniques described herein relate to a method, wherein the fracturing tool includes a first fracturing tool head and a second fracturing tool head positioned on opposite sides of the rotor, wherein the first fracturing tool head includes first protrusions and the second fracturing tool head includes second protrusions aligned with the one or more magnets.

In some aspects, the techniques described herein relate to a method, wherein the applying isolation material to the one or more magnets in the rotor at least partially fills one or more fractures formed by the fracturing to maintain fractured pieces of the one or more magnets in position relative to one another while providing electrical isolation between the fractured pieces.

In some aspects, the techniques described herein relate to a method, wherein each magnet among the one or more magnets includes one or more notches to increase repeatability of the fracturing.

In some aspects, the techniques described herein relate to a rotor including: a lamination stack; and a magnet positioned in the lamination stack, the magnet including one or more fractures formed after the magnet is installed in the lamination stack.

In some aspects, the techniques described herein relate to a rotor, wherein the one or more fractures are formed by a fracturing tool.

In some aspects, the techniques described herein relate to a rotor, wherein the magnet further includes isolation material in the one or more fractures.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including a power converter, according to one or more embodiments.
FIG. 2 depicts an exemplary cross-section view of a motor, according to one or more embodiments.
FIG. 3 depicts an exemplary system infrastructure for a controller, according to one or more embodiments.
FIG. 4 depicts an exemplary plot comparing volumetric loss density, according to one or more embodiments.
FIG. 5 depicts an exemplary magnet, according to one or more embodiments.
FIG. 6 depicts an exemplary plot of loss ratio compared to magnet segmentation, according to one or more embodiments.
FIG. 7 depicts an exemplary method for fracturing a magnet, according to one or more embodiments.
FIG. 8 depicts an exemplary fracturing device, according to one or more embodiments.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section.

Various embodiments of the present disclosure relate generally to reducing eddy current loss in motors and, more particularly, to fracturing magnets within a motor to reduce loss caused by eddy currents.

Inverters, such as those used to drive a motor in an electric vehicle, for example, are responsible for converting High Voltage Direct Current (HVDC) into Alternating Current (AC) to drive the motor. A three phase inverter may include a bridge with six power device switches (for example, power transistors such as IGBT or MOSFET) that are controlled by Pulse Width Modulation (PWM) signals generated by a controller. An inverter may include three half-H bridge switches to control the phase voltage, upper and lower gate drivers to control the switches, a PWM controller, and glue logic between the PWM controller and the gate drivers. The PWM controller may generate signals to define the intended states of the system. The gate drivers may send the signals from the PWM controller to the half-H bridge switches. The half-H bridge switches may drive the phase voltage. Six phase (or other phase) inverters, chargers, DC-DC converters, and/or multi-level inverters are not excluded from this concept and will follow similar principles. The present disclosure refers to an inverter as an example embodiment of a power converter. Power converters may include chargers, inverters, or DC-DC converters, for example.

Electric vehicles, energy storage systems, and backup generators, for example, convert electric power from one form to another. Additionally, an on-board charger for a vehicle, for example, may have a dual purpose. The on-board charger may be a bi-directional system that converts AC voltage to DC voltage in a charging mode (grid-to-battery) and DC voltage to AC voltage in a discharge or inverter mode (battery-to-grid). The charging mode may convert the grid AC into DC voltage to charge the vehicle high voltage (HV) battery, and the discharge or inverter mode may convert the HV battery DC voltage into AC voltage that may be supplied to a load of the grid line voltage, be supplied as a backup generator to power a house when the grid is down, or as an inverter to supply voltage to vehicle AC outlets, for example.

A PMSM may use permanent magnets that interact with a rotating electric field of a stator to enable motor rotation. Magnets may be made of electric conductive material, which may, when in use in the motor, increase eddy current loss. Eddy current loss may increase the temperature of the motor which may damage the motor. For example, when the magnet temperature exceeds the Curie temperature, the magnets may lose their magnetization rendering them inactive during the electric machine performance. Some solutions attempt to reduce eddy current loss by magnet segmentation and machining of dedicated features.

For example, using a single-piece magnet causes the Eddy current level to be high. Maintaining the same magnet volume while using smaller magnets, replacing a single large magnet, may lower the Eddy current level, but the fabrication cost of the magnet increases due to, for example, the grinding operations for multiple magnets. Magnet segmentation increases cost and uses a more complex manufacturing process. Some solutions add a "snake" shape using Electrical Discharge Machining (EDM) process. Manufacturing a snake shape increases production cost and requires a more complex manufacturing process.

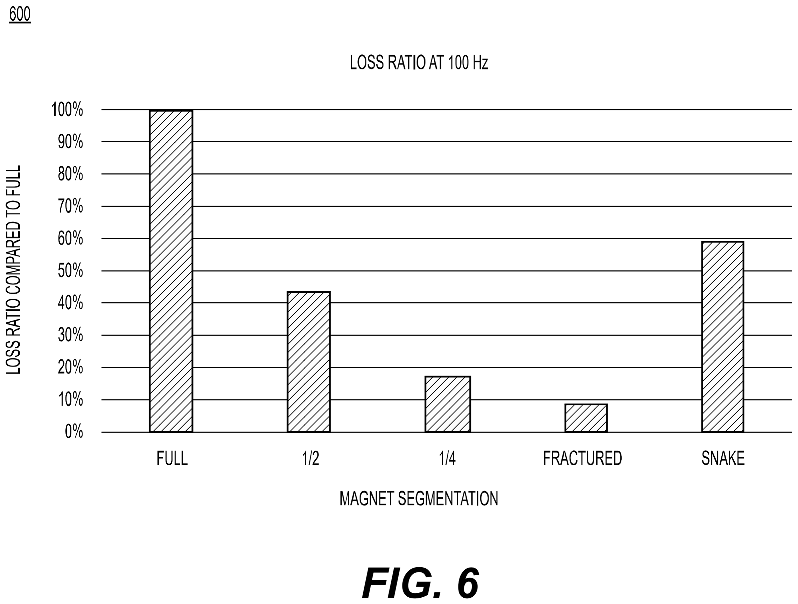

One or more embodiments may reduce eddy current and associated losses by fracturing, or cracking, one or more magnets once installed inside a lamination stack prior to the impregnation process. The fracturing process may ensure that no material continuity exists between the segments. As a result, there is no conductive path across the fractured plane, which may lead to very high electrical resistivity along all fracture planes. For example, one or more magnets may be installed in the lamination stack as unfractured magnets and then fractured after being installed in the lamination stack. This may generate smaller pieces of magnets, thus reducing the eddy current and associated losses. For example, an integrated loss on a large magnet may be 1.56 W, while it is 0.178 W for a fractured magnet under the same conditions. For example, FIG. 6 summarizes the loss change vs the segmentation of the magnets and fractured magnets. A minimum number of two pieces having similar volume may be required to obtain benefit on eddy current reduction. In some embodiments, each fractured magnet may include at least two pieces as a structural feature resulting from the fracturing process. The more number of pieces obtained after cracking process, the higher the loss reduction obtained. The example presented in FIG. 6 shows a reduction of about 90% of the magnet losses when cracked into 10 pieces of similar volume. One or more embodiments may fracture or break the magnets in a final position, thereby decreasing production costs and decreasing eddy current loss.

Magnets may be made of fragile (brittle) materials. For example, the magnets may include a brittle material configured to fracture when a compressive force is applied. To break (fracture) the magnets in position (a final position) may require a fracturing tool. The fracturing tool may compress the magnet with a wedge, applying local compressive force. This method may increase repeatability of the fracturing by adding dedicated notches or shapes to the raw magnet. The added dedicated notches or shapes may reduce cost compared to the extra cutting and grinding operations as well as the complex method required to handle higher number of smaller pieces, as described above.

One or more embodiments may reduce loss in magnets of a PMSM rotor. The losses are generated by eddy currents induced by variations of the magnetic field due to rotation of the rotor and the varying current in the stator windings. Fracturing the magnets when they are in the rotor prior to executing a potting step with an isolation material, such as an epoxy material, may reduce eddy current formation. For example, the fragmentation may create smaller magnets reducing the eddy current and thus the eddy current loss. Breaking or cracking (fracturing) may be performed when the magnets are in position in the rotor lamination. By fracturing (breaking, cracking) the magnets when they are in position in the rotor lamination may decrease production costs since only one magnet is necessary and one magnet may be easy to assemble. Fracturing the magnets when the magnets are located in a final position (e.g., in the rotor before lamination) may significantly reduce eddy currents.

One or more embodiments may describe a method of forming fractured magnets when the magnets are located in a final position (e.g., in the rotor before lamination). Step 1 may include positioning the magnets in the rotor. For example, one or more magnets may be installed in the lamination stack as unfractured magnets. Step 2 may include breaking (or fracturing) the magnets after the magnets are installed in the lamination stack. Step 3 may include filling the gaps with isolation material.

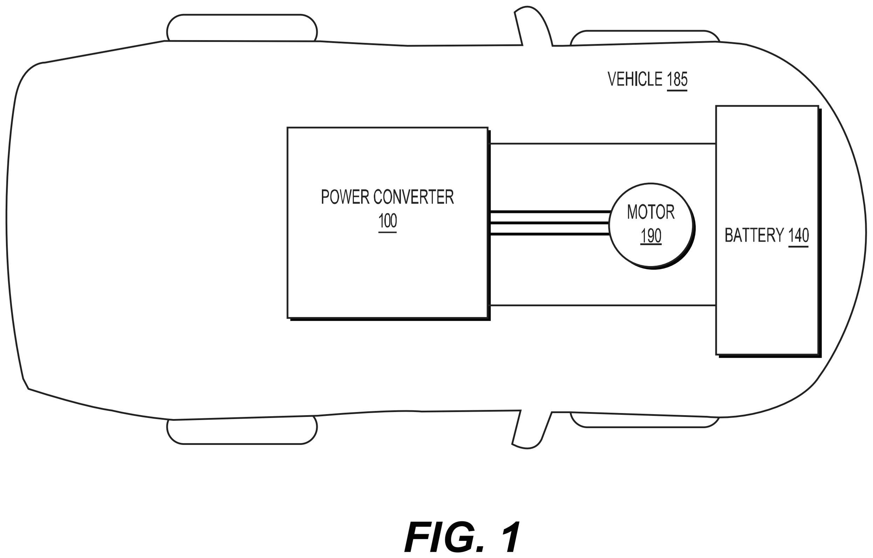

FIG. 1 depicts an exemplary system infrastructure for a vehicle including a power converter, according to one or more embodiments. The power converter 100 may be a combined inverter and converter. Alternatively, the inverter may be an inverter without a converter. In the context of this disclosure, a battery charger, the inverter, the converter, or any combination thereof may be referred to as power converter 100. Electric vehicle 185 may include power converter 100, motor 190, and battery 140. Power converter 100 may include components to receive electrical power from an external source and output electrical power to charge battery 140 of electric vehicle 185. Power converter 100 may convert DC power from battery 140 in electric vehicle 185 to AC power, to drive motor 190 of the electric vehicle 185, for example, but the embodiments are not limited thereto. For example, power converter 100 may include components to receive electrical power from an external source and output electrical power to charge battery 140 without motor 190 connected to power converter 100. Power converter 100 may convert DC power from battery 140 in electric vehicle 185 to AC power, to drive AC components other than motor 190 of the electric vehicle 185. Power converter 100 may be bidirectional, and may convert DC power to AC power, or convert AC power to DC power, such as during regenerative braking, for example. Power converter 100 may be a three-phase inverter, a single-phase inverter, or a multi-phase inverter.

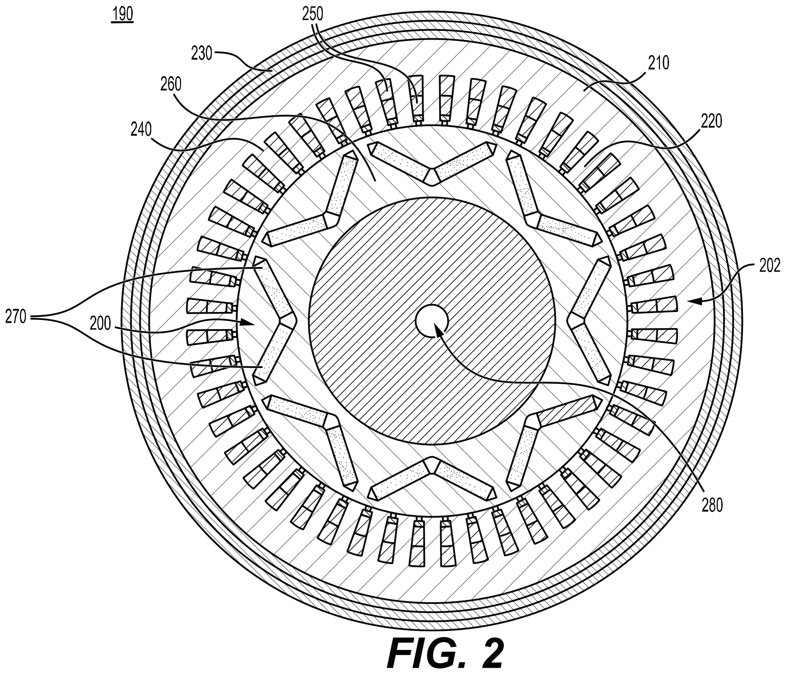

FIG. 2 depicts an exemplary cross-section view of a motor, according to one or more embodiments. The motor 190 may include a rotor 200 and a stator 202. The stator 202 may include a stator yoke 210, stator inner teeth 220, a water jacket 230, stator outer teeth 240, and windings 250. Rotor 200 may include rotor lamination stack 260 and rotor shaft 280. The rotor lamination stack 260 may include one or more lamination sheets. The rotor lamination stack 260 may include magnet 270 (e.g., magnet 270 may include one or more magnets). The magnet 270 may be aligned in a parallel direction to the rotor shaft 280. For example, rotor 200 may rotate relative to the stator 202 based on a current in the windings 250.

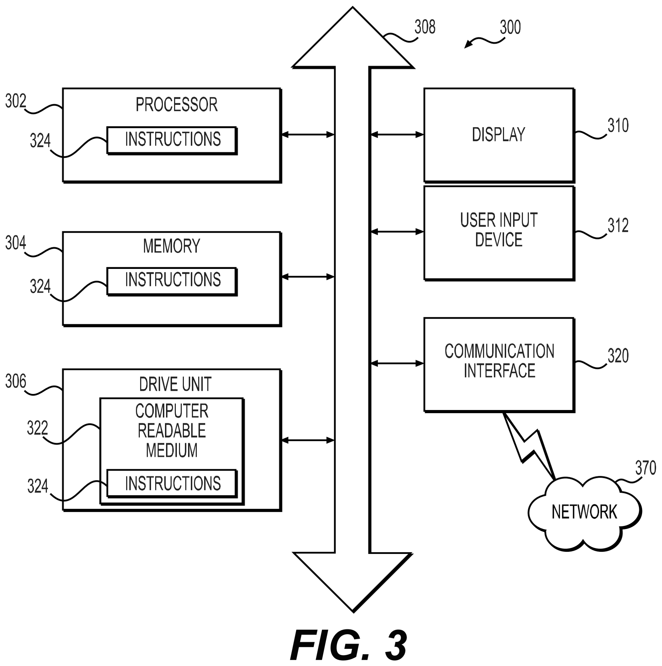

FIG. 3 depicts an exemplary system infrastructure for a controller, according to one or more embodiments. Controller 300 may include one or more controllers.

The controller 300 may include a set of instructions that can be executed to cause the controller 300 to perform any one or more of the methods or computer based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a power converter, a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As depicted in FIG. 3, the controller 300 may include a processor 302, e.g., a central processing unit (CPU), a graphics processing unit (GPU), or both. The processor 302 may be a component in a variety of systems. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media, and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, micro-code, and the like, operating alone or in combination. Likewise, processing strategies may include multiprocessing, multitasking, parallel processing, and the like.

As depicted, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g., software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is depicted to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

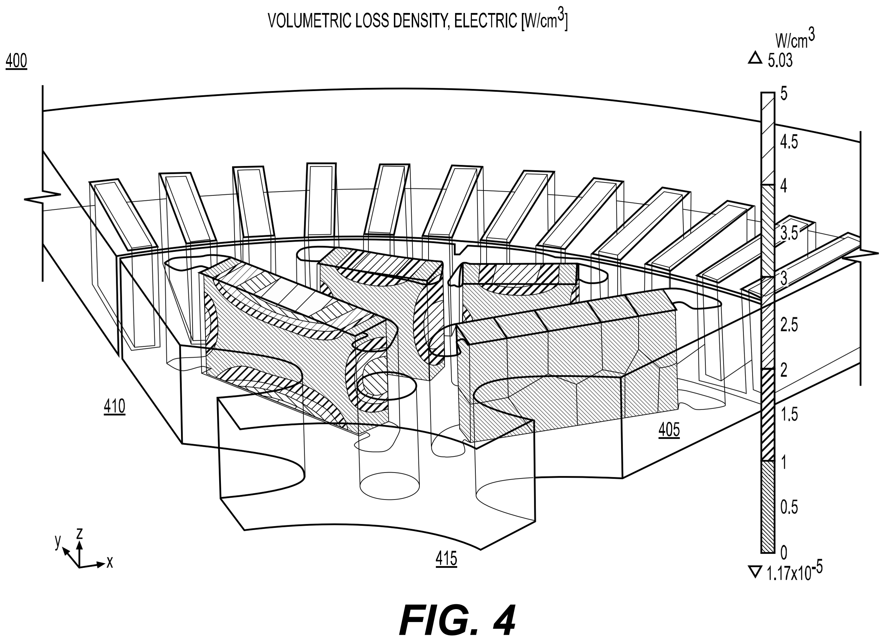

FIG. 4 depicts an exemplary plot comparing volumetric loss density 400, according to one or more embodiments. As shown in FIG. 4, the volumetric loss density 400 illustrates the distribution of eddy current losses across different magnet configurations within a rotor assembly. The volumetric loss density 400 may be measured in W/cm³ and may range from approximately 1.17×10⁻⁵ W/cm³ at a minimum value to approximately 5.03 W/cm³ at a maximum value.

With continued reference to FIG. 4, a solid magnet 410 appears on the left side of the plot. The solid magnet 410 displays higher volumetric loss density 400 as indicated by the figure. The solid magnet 410 represents a single-piece magnet configuration without segmentation or fracturing.

A stacked magnet 415 appears in the center of the plot between the solid magnet 410 and a fractured magnet 405. The stacked magnet 415 may include multiple thin magnet layers arranged in a stacked configuration. The stacked magnet 415 may display intermediate volumetric loss density 400 values compared to the solid magnet 410 and the fractured magnet 405.

As further shown in FIG. 4, the fractured magnet 405 appears on the right side of the plot. The fractured magnet 405 displays lower volumetric loss density 400 as indicated by the figure. The fractured magnet 405 may include multiple fractures extending through the magnet body, creating smaller magnet pieces that reduce eddy current loop formation. For example, the multiple fractures may extend through the thickness of the magnet body.

The comparison between the solid magnet 410 and the fractured magnet 405 demonstrates a reduction in eddy current losses achieved through fracturing the magnet. Under simulated conditions, the integrated loss on the solid magnet 410 may be approximately 1.56 W, while the integrated loss on the fractured magnet 405 may be approximately 0.178 W. The fractured magnet 405 may achieve this reduction in volumetric loss density by creating electrical discontinuities between the magnet pieces, which may interrupt eddy current paths and reduce associated power losses during motor operation.

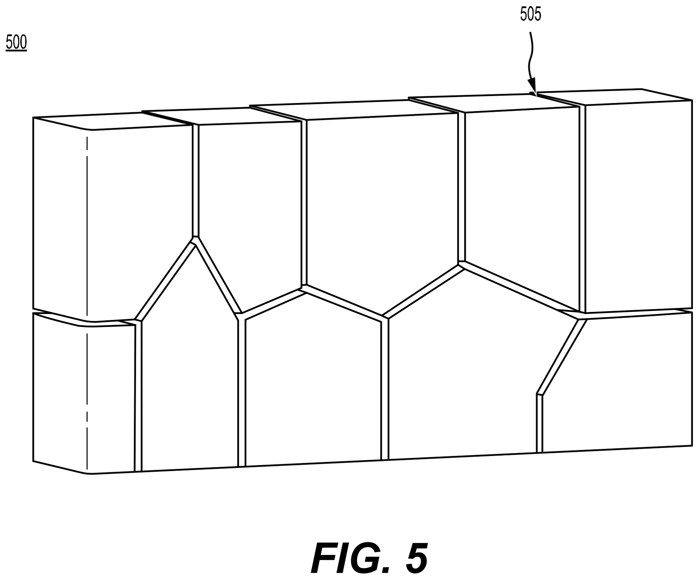

FIG. 5 depicts an exemplary magnet, according to one or more embodiments. As shown in FIG. 5, a fractured magnet 500 includes one or more fractures 505 extending through the magnet body. The fractures 505 divide the fractured magnet 500 into multiple pieces. Each fracture of fractures 505 may extend through the entire thickness of the fractured magnet 500 to create electrical discontinuities within the fractured magnet 500.

With continued reference to FIG. 5, the fracture surfaces of the fractures 505 may be oriented perpendicular to a magnetization direction of the fractured magnet 500. The perpendicular orientation of the fracture surfaces relative to the magnetization direction may reduce eddy current loops within the fractured magnet 500. The fractures 505 extending through the entire thickness of the fractured magnet 500 may create maximum internal electrical resistance between the resulting pieces.

The fractured magnet 500 may form part of a rotor, and the fractured magnet 500 may include one or more fractures 505 as described above. The pieces created by the fractures 505 may create contact electrical resistance between fragments of the fractured magnet 500. The contact electrical resistance between fragments may prevent large eddy current loops from forming within the fractured magnet 500. The electrical discontinuities created by the fractures 505 may function similarly to stacked magnet configurations while maintaining the fractured magnet 500 in position within a rotor structure.

FIG. 6 depicts an exemplary plot 600 of loss ratio compared to magnet segmentation, according to one or more embodiments. As shown in FIG. 6, a loss ratio appears on the vertical axis as a percentage compared to a full magnet, ranging from 0% to 100%. The horizontal axis represents different magnet configurations including Full, 1/2, 1/4, Fractured, and Snake.

With continued reference to FIG. 6, the Full magnet configuration shows the loss ratio at 100%, representing a baseline for comparison with other segmentation approaches. The 1/2 segmentation configuration shows the loss ratio at approximately 45%, demonstrating that dividing a magnet into two pieces of similar volume may obtain benefit on eddy current reduction. The 1/4 segmentation configuration shows the loss ratio at approximately 20%, indicating further reduction in eddy current losses as the number of pieces increases.

The Fractured configuration shows the loss ratio at approximately 10%, representing the lowest loss ratio among the configurations depicted in FIG. 6. The Fractured configuration may achieve approximately 90% reduction in magnet losses due to eddy currents when a magnet is fractured into at least two pieces of similar volume. For example, the fractured configuration may include ten pieces of similar volume, The Snake configuration shows the loss ratio at approximately 55%, which is higher than the segmented and fractured configurations.

As further shown in FIG. 6, the loss ratio demonstrates asymptotic loss reduction behavior as the number of magnet pieces increases. In some instances, a minimum of 2 pieces having similar volume may obtain benefit on eddy current reduction compared to a full magnet. In some embodiments, each fractured magnet may include at least two pieces as a structural feature. In other instances, a minimum of 10 pieces having either the similar volume or different volume, may obtain the eddy current reduction. In some embodiments, each fractured magnet may include at least ten pieces as a structural feature to achieve optimal loss reduction.

The asymptotic behavior indicates that a minimum number of fragments may be reached for consistent performance, and fracturing beyond a threshold number of pieces may yield diminishing returns in loss reduction. For example, fracturing a magnet into at least two pieces of similar volume may achieve the asymptotic region where the loss ratio approaches a minimum value. The fracturing process may provide repeatable loss reduction when the number of pieces reaches or exceeds the threshold for asymptotic behavior, enabling consistent electromagnetic performance across production units.

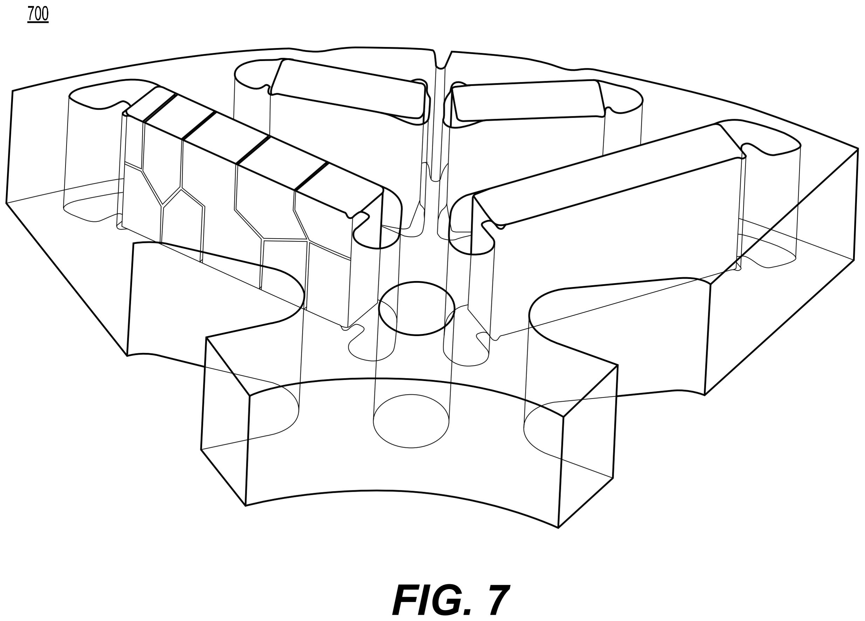

FIG. 7 depicts an exemplary method for fracturing a magnet, according to one or more embodiments. As shown in FIG. 7, a lamination stack 700 contains magnets that have been fractured. The lamination stack 700 includes a plurality of magnet receiving areas (e.g., cavities) arranged in a radial pattern around a central opening. The magnets may be positioned within the lamination stack 700, then fractured in-situ with each magnet displaying the resulting one or more fractures 505. The fractures 505 may extend through the thickness of the magnets, creating smaller magnet pieces within each magnet receiving area.

For example, a method for reducing eddy current losses in a rotor may include placing one or more magnets in a rotor. The method may further include fracturing the one or more magnets in the rotor. The method may also include applying isolation material to the one or more magnets in the rotor. The isolation material may be applied before fracturing the one or more magnets. The magnets may be fractured when positioned within a single lamination disc rather than a fully assembled rotor stack. The lamination stack 700 represents a single disc or layer of the rotor assembly where the magnets are fractured in position prior to assembly with additional lamination layers. The isolation material may be applied after fracturing the one or more magnets.

With continued reference to FIG. 7, the method may include applying isolation material to the one or more magnets in the rotor prior to fracturing the one or more magnets in the rotor. The isolation material applied before fracturing may hold magnet pieces in position during and after the fracturing operation. The fracturing operation may break the isolation material along with the magnet material. The method may then include reapplying isolation material after fracturing to at least partially fill gaps created by the fractures 505 and to provide electrical insulation between the resulting magnet pieces.

The fractures 505 may be oriented to create electrical isolation between the resulting magnet pieces, which may reduce eddy current formation during motor operation. The fractures 505 may propagate such that the magnet separates into individual pieces. The isolation material filling areas between fractured magnet pieces may provide electrical insulation equivalent to having separate magnets with insulated layers. The isolation material may also function to maintain fractured pieces of the magnets in position relative to one another within the rotor structure. The magnet may include isolation material in the one or more fractures 505. The isolation material in the fractures 505 may increase contact electrical resistance between adjacent magnet pieces, preventing large eddy current loops from forming within the magnet structure.

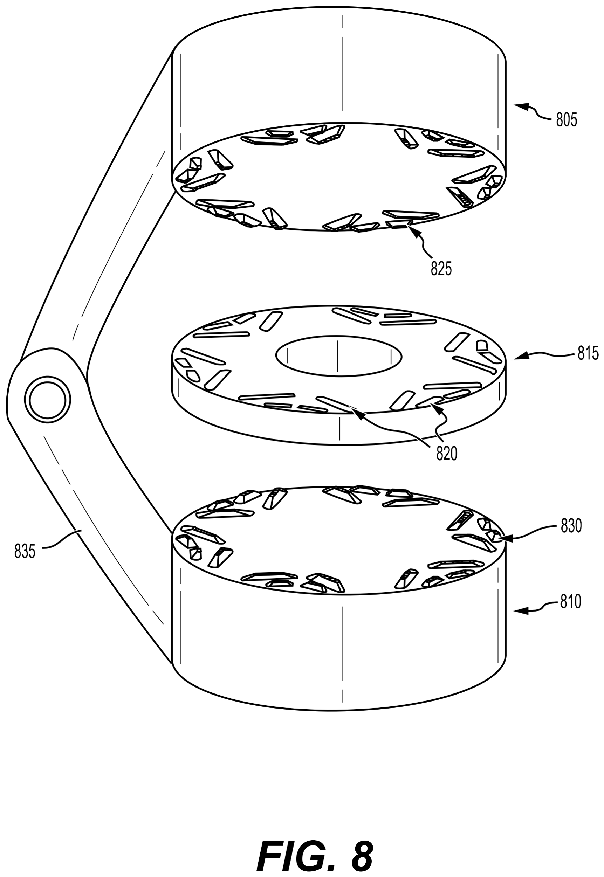

FIG. 8 depicts an exemplary fracturing device, according to one or more embodiments. As shown in FIG. 8, a first fracturing tool head 805 and a second fracturing tool head 810 are positioned to apply force to one or more magnets 820 located within a lamination stack 815. The first fracturing tool head 805 and the second fracturing tool head 810 are positioned on opposite sides of the lamination stack 815. The fracturing device may include a clamp 835 (e.g., hinge, press, or compression structure) that secures the attaches to the first fracturing tool head 805 and the second fracturing tool head 810.

With continued reference to FIG. 8, the first fracturing tool head 805 includes first protrusions 825 extending from a surface of the first fracturing tool head 805. The second fracturing tool head 810 includes second protrusions 830 extending from a surface of the second fracturing tool head 810. The first protrusions 825 and the second protrusions 830 may have a pointed shape configured to create localized stress on the one or more magnets 820. The first protrusions 825 and the second protrusions 830 contact the one or more magnets 820 and apply localized compressive force to fracture the one or more magnets 820 at specific locations. The first protrusions 825 and the second protrusions 830 may include one or more wedges configured to apply the localized compressive force to the one or more magnets 820. First fracturing tool head 805 or second fracturing tool head 810 may include different shapes, such as wedges, hemispheres, and other shapes.

The fracturing device may apply a force through the first protrusions 825 and the second protrusions 830 to create fractures in the one or more magnets 820. The axial force may be applied parallel to faces of the lamination stack 815. For example, the force may be applied in an axial direction relative to the lamination stack 815. The first protrusions 825 and the second protrusions 830 may be aligned to contact the one or more magnets 820 without contacting other areas of the lamination stack 815. The fracturing process may use mechanical force rather than heat to fracture the one or more magnets 820. Using mechanical force may avoid damaging electrical insulation of the laminations within the lamination stack 815. Each of the one or more magnets 820 may be aligned with one or more of first protrusions 825 and one or more of second protrusions 830.

As further shown in FIG. 8, the fracturing device may include a fracturing tool comprising two jaws positioned on opposite sides of the one or more magnets 820. The first fracturing tool head 805 may form a first jaw and the second fracturing tool head 810 may form a second jaw. The first protrusions 825 and the second protrusions 830 function as teeth that contact surfaces of the one or more magnets 820. The fracturing tool may create fractures in the one or more magnets 820 after the one or more magnets 820 is installed in the lamination stack 815.

The fracturing process may be performed with the same jaw configuration, the same force, and the same positioning to ensure repeatability from one a first lamination stack to another lamination stack. The clamp 835 may provide repeatable positioning of the lamination stack 815 relative to the first fracturing tool head 805 and the second fracturing tool head 810. The configuration of the first protrusions 825 and the second protrusions 830 enables repeatable fracture patterns from one lamination stack to another lamination stack.

For example, each of the first fracturing tool head 805 and the second fracturing tool head 810 may include a configuration of two or more of first protrusions 825 and/or two or more of second protrusions 830 that align with each of the one or more magnets 820. Configurations of the first protrusions 825 and the second protrusions 830 may include a different number of teeth per one or more magnets 820 or the same number of teeth per one or more magnets 820. Configurations of the first protrusions 825 may include a different number of teeth that align for each of the one or more magnets 820 than configurations of the second protrusions 830.

The fracturing tool may be designed to fracture all magnets in the lamination stack 815 simultaneously. The first protrusions 825 and the second protrusions 830 may be positioned in front of each magnet location within the lamination stack 815. In some cases, the fracturing process may require rotating the lamination stack 815 and compressing again to achieve desired fracture patterns in the one or more magnets 820.

The one or more magnets 820 may include dedicated notches or shapes added to a raw magnet to increase repeatability of the fracturing results. Each fractured magnet may include one or more notches that were formed prior to fracturing and remain as a structural feature of the fractured magnet after the fracturing process. The dedicated notches or shapes may define locations where the one or more magnets 820 fractures when the first protrusions 825 and the second protrusions 830 apply force to the one or more magnets 820. The first protrusions 825 and the second protrusions 830 may align with the dedicated notches or shapes to create consistent fracture patterns.

One or more embodiments may reduce eddy current losses in permanent magnet synchronous machines by fracturing magnets after installation in a rotor lamination stack. One or more embodiments may achieve approximately 90% reduction in eddy current losses when magnets are fractured into at least two pieces of similar volume. For example, the magnets may be fractured into ten pieces. One or more embodiments may decrease production costs by using one or more magnets that are fractured in position rather than manufacturing and assembling multiple smaller magnet pieces.

One or more embodiments may simplify assembly processes by eliminating the need to handle and position multiple small magnet pieces within rotor slots. One or more embodiments may provide repeatable fracture patterns through the use of fracturing tools with protrusions that apply localized compressive force at specific locations on the magnet. One or more embodiments may maintain structural integrity of fractured magnets by applying isolation material to fill gaps created by fractures and provide electrical insulation between magnet pieces.

One or more embodiments may avoid damage to lamination electrical insulation by using mechanical fracturing processes rather than heat-based methods. One or more embodiments may reduce motor operating temperatures by decreasing eddy current losses, thereby protecting magnets from exceeding Curie temperature and losing magnetization. One or more embodiments may provide consistent electromagnetic performance across production units by achieving asymptotic loss reduction behavior when the number of magnet pieces reaches a threshold value. One or more embodiments may reduce manufacturing complexity compared to alternative approaches such as magnet segmentation with grinding operations or electrical discharge machining of snake patterns.

Other embodiments of the disclosure will be apparent to those skilled in the art from consideration of the specification and practice of the invention disclosed herein. It is intended that the specification and examples be considered as exemplary only, with a true scope of the invention being indicated by the following claims.

## Claims

1. A system comprising a motor, the motor including:
a stator including one or more windings; and
a rotor to rotate relative to the stator based on a current in the one or more windings, the rotor including:
a rotor shaft; and
a lamination stack on the rotor shaft, the lamination stack including:
one or more lamination sheets, and
one or more fractured magnets in the one or more lamination sheets,
wherein the one or more fractured magnets are fractured after being installed in the lamination stack.

2. The system of claim 1, wherein the one or more fractured magnets include permanent magnets.

3. The system of any one of claims 1 to 2, wherein the one or more fractured magnets, that are fractured after being installed in the lamination stack, include one or more fractures extending in a direction perpendicular to a magnetization direction of the one or more fractured magnets.

4. The system of claim 3, wherein the one or more fractures are formed by a compressive force applied in an axial direction relative to the lamination stack after the one or more fractured magnets are installed in the lamination stack as unfractured magnets.

5. The system of any one of claims 1 to 4, wherein each fractured magnet among the one or more fractured magnets includes at least two pieces, preferably at least ten pieces; and/or
wherein each fractured magnet among the one or more fractured magnets includes one or more notches; and/or
wherein each fractured magnet among the one or more fractured magnets includes isolation material in one or more fractures.

6. The system of any one of claims 1 to 5, wherein the one or more fractured magnets include a brittle material configured to fracture when a compressive force is applied.

7. The system of any one of claims 1 to 6, wherein:
the one or more lamination sheets define one or more cavities, and
the one or more fractured magnets are positioned in the one or more cavities.

8. The system of any one of claims 1 to 7, further comprising:
a power converter connected to the motor; and
a battery connected to the power converter,
wherein the system is provided as a vehicle.

9. A method comprising:
placing one or more magnets in a rotor;
fracturing the one or more magnets in the rotor; and
applying isolation material to the one or more magnets in the rotor.

10. The method of claim 9, wherein fracturing the one or more magnets includes using a fracturing tool.

11. The method of claim 10, wherein the fracturing tool includes one or more of a wedge or a protrusion for fracturing the one or more magnets; and/or
wherein the fracturing tool includes a first fracturing tool head and a second fracturing tool head positioned on opposite sides of the rotor, wherein the first fracturing tool head includes first protrusions and the second fracturing tool head includes second protrusions aligned with the one or more magnets.

12. The method of any one of claims 9 to 11, wherein the applying isolation material to the one or more magnets in the rotor at least partially fills one or more fractures formed by the fracturing to maintain fractured pieces of the one or more magnets in position relative to one another while providing electrical isolation between the fractured pieces.

13. The method of any one of claims 9 to 12, wherein each magnet among the one or more magnets includes one or more notches to increase repeatability of the fracturing.

14. A rotor comprising:
a lamination stack; and
a magnet positioned in the lamination stack, the magnet including one or more fractures formed after the magnet is installed in the lamination stack.

15. The rotor of claim 14, wherein the one or more fractures are formed by a fracturing tool; and/or
wherein the magnet further includes isolation material in the one or more fractures.
